# EUROPEAN PATENT SPECIFICATION

(11) **EP 1 304 517 B1**
(45) Date of publication and mention of the grant of the patent: **21.12.2011**
(21) Application number: 01951891.9
(22) Date of filing: 09.07.2001
(51) Int. Cl.: F16K 31/68

(54) **THERMOSTAT AND MOUNTING STRUCTURE OF THE THERMOSTAT**
THERMOSTAT UND EINBANSTRUKTUR EINES THERMOSTATS
THERMOSTAT ET STRUCTURE DE MONTAGE D'UN TEL THERMOSTAT

(30) Priority: 25.07.2000 JP 2000223309
(43) Date of publication of application: 23.04.2003
(73) Proprietor: Nippon Thermostat Co., Ltd., Kiyose-shi, Tokyo 204-0003 (JP); HONDA GIKEN KOGYO KABUSHIKI KAISHA, Minato-ku, Tokyo 107-0062 (JP)
(72) Inventor: IWAKI, Takahiro, Kiyose-shi, Tokyo 204-0003 (JP); HAMANO, Masahisa, Kiyose-shi, Tokyo 204-0003 (JP); KAKEMIZU, Kenichiro, Wako-shi, Saitama-351-0113 (JP); KUROSAKA, Hitoshi, Wako-shi, Saitama-351-0113 (JP); SATO, Kazuhiko, Ageo-shi, Saitama 362-0033 (JP); YAGINUMA, Tadao, Ageo-shi, Saitama 362-0033 (JP)
(74) Representative: HOFFMANN EITLE
(86) International application number: PCT/JP2001/005937
(87) International publication number: WO 2002/008647

(56) References cited:
- JP-A- 8 121 134
- JP-A- 53 076 429
- JP-B2- 2 932 348
- JP-U- 57 025 114
- JP-U- 57 027 571
- JP-Y2- 59 032 767
- JP-Y2- 60 021 593
- US-A- 3 682 380

## Description

### Field of Art

The present invention relates to a thermostat which is mounted to an internal combustion engine for controlling the flow of a liquid coolant by blockage and communication of a liquid flow path and a structure for mounting said thermostat therebetween.

### Background of Art

The majority of the cooling systems for an automotive internal combustion engine presently available on the market are designed to cool the engine by water used as a liquid coolant or a liquid cooling medium. This type of cooling system is known as the water cooled type cooling system which is employed for an engine of four-wheeled vehicles as well as an engine of two-wheeled vehicles.

Said water cooled type cooling system for an automotive internal combustion engine mentioned above is provided with a radiator outside the engine body, making it necessary to circulate the liquid coolant by connecting the radiator and the engine body with a rubber hose or the like. Thus, the system is comprised of a radiator acting as a heat exchanger, a water pump which sends the liquid coolant from the engine to the radiator forcibly under pressure, a thermostat which controls a flow of the liquid coolant on the basis of the temperature of the liquid coolant flowing out of or into the radiator to maintain a suitable temperature, and a rubber hose or the like which defines a circular flow path of the liquid coolant.

Thus, such structure prevents an overheating caused by the heat from the engine and on the other hand it prevents an over cooling in a cold season, thus always maintaining the engine temperature at an optimum level.

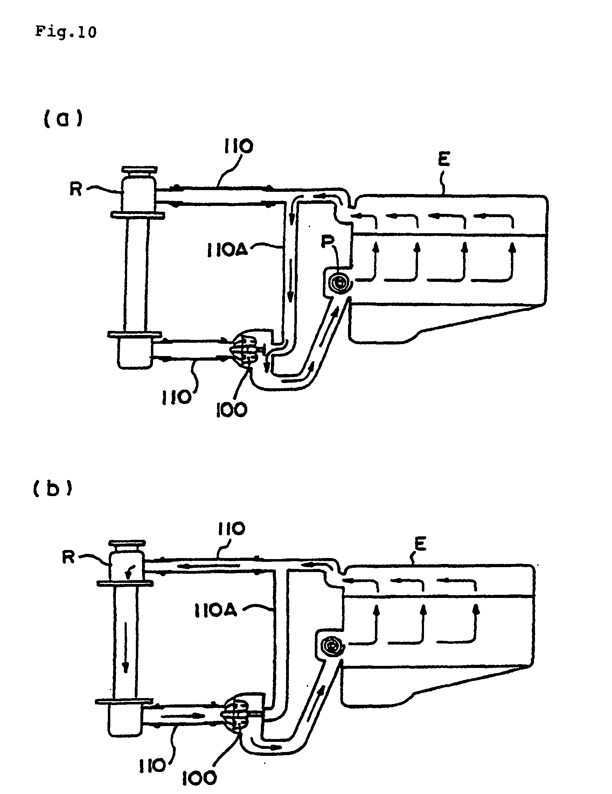

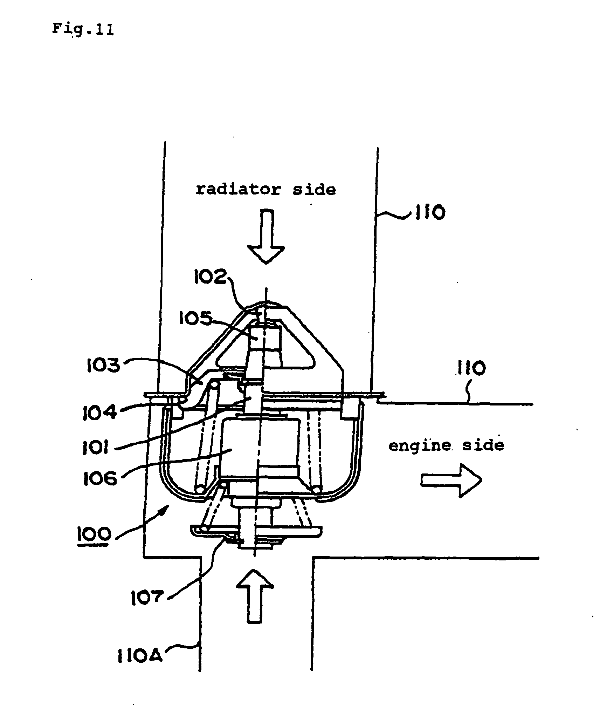

A thermostat in general and a structure for mounting such thermostat to be employed for aforementioned water cooled type system will be described with reference to Fig. 10 (a), Fig. 10 (b) and Fig. 11. Fig. 10 (a) and Fig. 10 (b) are explanatory views in which the conventional thermostat is mounted to the liquid coolant flow path of an internal combustion engine and Fig. 11 is an enlarged view of the thermostat being mounted as shown in Figs. 10(a) and 10(b).

As shown in said figures, a thermostat 100 is arranged to be mounted at a predetermined position in a liquid coolant flow path 110 defined between a body of an engine E and a radiator R. Also, as shown in Fig. 11, said thermostat 100 is provided with a piston 102 which moves back and forth as a result of the action of an element 101. Said thermostat 100 is arranged in the liquid coolant flow path 110 such that the moving direction of the piston 102 is set parallel to a flow direction of the liquid coolant.

Further, on said thermostat 100, a valve element 103 and a valve seat 104 come into and out of contact with each other by the reciprocal action of the piston 102 to assure blockage and communication of the liquid coolant flow path.

Still, in Fig. 11, the numeral 105 denotes a guide section to guide the piston 102 for reciprocal action thereof, the numeral 106 denotes a wax case charged with wax, the numeral 107 denotes a second valve element to close or to open a bypass line 110A. Moreover, in Figs. 10, the letter P denotes a water pump and the letter R denotes a radiator.

Here, an operation of said thermostat 100 is described hereinafter with reference to Fig. 10 (a). As shown in Fig. 10 (a), the thermostat 100 causes the liquid coolant flow path 110 to be closed from the time when the engine is started until the time when the engine is warmed up to an optimum temperature.

Thus, the water coolant from the engine E will not flow into the radiator R but circulate back to the engine E by way of the bypass line 110A (see the arrow marks in Fig.10 (a)) such that the engine is warmed up to the optimum temperature quickly.

On the other hand, after the engine E is warmed up to said optimum temperature, the valve element 103 of the thermostat 100 opens as shown in Fig. 10 (b), such that the liquid coolant flow path 110 of the radiator side is brought into communication. As a result, the liquid coolant circulates to the engine E by way of the radiator R (see the arrow marks in Fig.10 (b)) and therefore the inside of the engine E is cooled to maintain the temperature at an optimum level.

By the way, since said conventional thermostat is located inside the liquid coolant flow path, a pipe diameter of the liquid coolant flow path 110 where the thermostat 100 is located is required to be large to maintain the flow of the liquid coolant in a predetermined quantity within the liquid flow path. In addition, there are many limitations to the place where the thermostat can be located and further, it is difficult to conduct a mounting operation of the thermostat.

To solve the problems as described above, a buried type thermostat which is designed to be buried in an insertion hole 120c formed across the liquid coolant flow path 121 in an engine head 120 has already been proposed as shown in Fig. 12 (Japanese Patent Application No. 11-17923).

The buried type thermostat 122 is composed of a hollow cylindrical valve body 123 in which an entrance opening 123a and an exit opening 123b are formed in correspondence with said liquid coolant flow path 121, a thermo valve 124 housed in said valve body 123, a lid 126 screwed to an engine head 120 to secure the valve body 123, and a coil spring 125 loaded between the thermo valve 124 and the lid 126 to urge the thermo valve 124 upward as seen in the figure.

Furthermore, said thermo valve 124 is composed of a wax case 124b charged with an expansive wax 124a, a diaphragm 124d to transmit the expansion and the contraction of the wax 124a to a semi-fluid 124c on upper side, a rubber piston 124e on the upper side where the reaction of the diaphragm 124d is transmitted through the semi-fluid 124c, a back-up plate 124g which transmits the reaction of said rubber piston 124e, and the piston 124f where the reaction of said back-up plate 124g is transmitted to push a metal fixtures 123e of cap member 123d and the element (valve element) 124h having these component members arranged in a laminated structure.

The thus constructed buried type thermostat 122 is buried in an insertion hole 120c formed across the liquid coolant flow path 121 in an engine head 120.

Next, an outline of an operation of the buried type thermostat 122 will be described herein after. The liquid coolant inside the liquid coolant flow path 121 is at a low temperature before the warming up and this temperature is transmitted to the wax 124a inside the wax case 124b by way of the periphery of the element 124h and the wax case 124b.

At this moment, the element (valve element) 124h is pressed upward by the coil spring 125 to close the entrance opening 123a and the exit opening 123b. As a result, the liquid coolant flow path 121 is blocked by the element (valve element) 124h such that the liquid coolant will not flow therethrough.

Then, as the temperature of the liquid coolant inside the liquid coolant flow path 121 rises with the lapse of time, the wax 124a inside the wax case 124b expands to increase its volume. And in response to this volume increase, the diaphragm 124d bulges to the upper side, giving rise to a force to push the rubber piston 124e, the backup plate 124g and the piston 124f upward by way of semi-fluid 124c on the upper side.

However, because a tip of the piston 124f is always in contact with the inner surface of the metal fixtures 123e of said cap member 123d, the element 124h itself is pushed down by a relative movement against the piston 124f.

As a result, the element (valve element) 124h opens the entrance opening 123a and the exit opening 123b of the valve body 123 such that the liquid coolant in the liquid coolant flow path 121 flows therethrough.

By the way, ridges 123c and 123d are formed in the periphery of the valve body 123 of said buried type thermostat 122 to have a structure so as to be inserted along guiding slots 120a and 120b of the engine head.

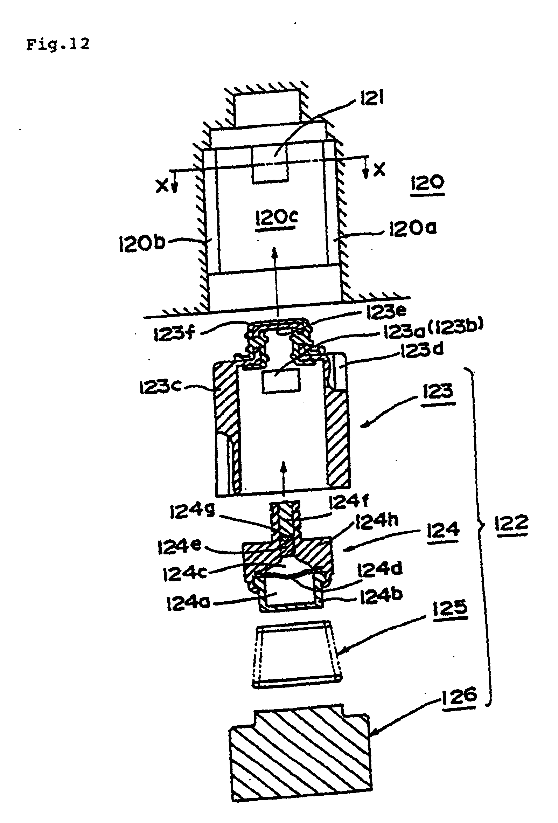

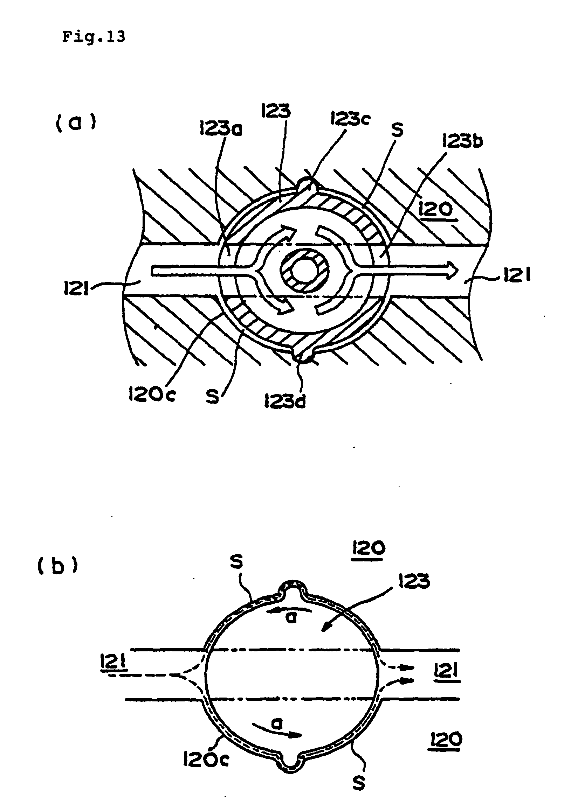

The above-described state is shown in Figs. 13. Fig. 13(a) is a cross-sectional view taken along the line X-X of Fig.12 and Fig. 13(b) is an explanatory view based on Fig. 13(a) for describing a work. In a state of Fig. 13(a), a flow path area FA is in the state of communication and the liquid coolant is flowing therethrough as shown by bold arrow marks.

When the valve body 123 is inserted into the insertion hole 120c, a narrow space S is left therebetween over the semicircular distances extending from the guiding slot 120a formed in the insertion hole to the guiding slot 120b formed therein; in other words, from the ridge 123d to the ridge 123c formed in the valve body. As a result, there is a technical problem where the liquid coolant flows through said space S even in a state where the valve element 124 blocks the entrance opening 123a and the exit opening 123b to close the liquid coolant flow path as shown with broken arrow marks of Fig. 13 (b).

To solve the above-described problem, a method has been proposed to ensure the valve body 123 is slightly rotated (see arrows a) to make said ridges 123c and 123d closely abut against the sidewall of the guiding slots 120a and 120b as shown in Fig. 13(b). However, there remains a problem that the close contact of the ridges with the sidewall of the guiding slots becomes insufficient by vibrations or for some other reasons, especially after a long-term service.

Also, there is another technical problem that processing costs increase because of the need to form an insertion hole in the engine head for inserting the valve body 123, and said guiding slots 120a and 120b.

US-A-3 682 380 describes a valve comprising a body having a central bore embodying a reduced-diameter seating, a pair of inlet ports and a pair of outlet ports connecting to the central bore for admission of fluid to and from the bore. Thermosensitive means are disposed in the bore in the path of fluid flow and have associated therewith a spring-loaded valve member displaceable, under the influence of the thermosensitive means, between a first position (with a pair of inlet ports in communication with the bore and at least one of the outlet ports) and a second position (cooperating with the seating to divide the bore into two chambers with each of the inlet ports of the pair communicating through a respective one of the chambers with a respective one of the outlet ports).

It is an object of the present invention to provide a thermostat which prevents a liquid coolant from leaking out through a space left between a valve body and an insertion hole, and at the same time reduces processing cost by decreasing work on an engine head (engine block) and a structure for mounting said thermostat.

A thermostat in accordance with the present invention comprises a cylindrical valve body formed with an entrance opening and an exit opening in a periphery thereof, a flow path area defined within said cylindrical valve body to bring said entrance opening and said exit opening into communication with each other, a valve element movable back and forth across said flow path area in response to a temperature change of a liquid coolant flowing in said flow path area to provide blockage and communication thereof with the flow path area by opening and closing said entrance opening and said exit opening with its movement, characterized by a synthetic rubber member on a periphery of the valve body between said entrance opening and said exit opening along the axis of the valve body.

Because the synthetic rubber member is formed in the periphery of the valve body between the entrance opening and the exit opening along the axis of the valve body, when the valve body is inserted into the engine head, said synthetic rubber member closely fits in the insertion hole thus preventing the liquid coolant from leaking out from the space left between the periphery of the valve body and the insertion hole.

Therefore, when the thermostat blocks the flow path area, an inconvenience where the liquid coolant on the radiator side leaks out to the engine side can be reduced and the engine warms up rapidly.

In addition, there is no need to form guiding slots in the engine head so that, the processing cost can be reduced.

In one variant, said synthetic rubber member is formed by baking it to the relevant position of the periphery of the valve body.

Where the synthetic rubber member and the valve body are united by attaching the synthetic rubber member to the valve body by baking, there is less chance of falling apart, and said results can be obtained for a long term.

In one embodiment a piston which moves the valve element in response to a change in temperature of the liquid coolant flowing inside said flow path area, projects from the upper-end surface of said valve body and comprises a cap section which is attached to an inner-side wall of the valve body, and said rubber member is formed on the periphery of said valve body and the upper-end surface of the cap section.

Where said rubber member is formed on the periphery of said valve body and the upper-end surface of the cap section, the liquid coolant is prevented from leaking out from not only the space left between the periphery side of the valve body and the insertion hole, but also from the space left between the upper-end surface of the cap section and the insertion hole.

Therefore, when the thermostat blocks the flow path area, an inconvenience where the liquid coolant on the radiator side leaks out to the engine side can be reduced more and the engine warms up rapidly.

In one embodiment, the thermostat comprises said piston which moves the valve element in response to a change in temperature of the liquid coolant flowing inside said flow path area, a cap member projecting from the upper-end surface of said valve body and said piston being in contact with an inner-side wall of the valve body, a connecting section which connects the upper-end surface of said valve body and the cap member, slots formed on the periphery of said valve body, a ridgeline of the connecting section and the upper-end surface of the cap member and said rubber member is formed on the periphery of said valve body and the upper-end surface of the cap member.

Where the slots are formed in above described manner, the synthetic rubber members can be mounted easily by just inserting them into said slots without methods such as baking.

Particularly, when said synthetic rubber members are ring-shaped, the synthetic rubber members can be assambled easily by just inserting the ring-shaped synthetic rubber member into the slots formed on the periphery of said valve body, ridgeline of the connecting section and the upper-end surface of the cap member.

Said thermostat may have a structure where said valve body is inserted into an insertion hole formed across said liquid coolant flow path area, and the valve body and said insertion hole come into close contact with each other by way of said synthetic rubber member.

Where the valve body and said insertion hole come into close contact with each other by way of said synthetic rubber member, when the thermostat blocks the flow path area, an inconvenience where the liquid coolant on the radiator side leaks out to the engine side can be reduced and the engine warms up rapidly.

For a better understanding of the invention and to show how the same may be carried into effect, reference will now be made, by way of example, to the accompanying drawings, in which:
Fig.1 is an exploded perspective view of the thermostat in accordance with a first embodiment of the present invention;
Fig.2 is a vertical cross-sectional view of the thermostat in accordance with the first embodiment of the present invention being located inside the internal combustion engine and also shows the thermostat closing the flow area;
Fig.3 is a vertical cross-sectional view showing the thermostat in accordance with the first embodiment of the present invention being located inside the internal combustion engine and also shows the thermostat opening the flow area;
Fig.4 is a plan view of the thermostat in accordance with a second embodiment of the present invention;
Fig.5 is a front view of the thermostat in accordance with a second embodiment of the present invention;
Fig.6 is a side view of the thermostat in accordance with a second embodiment of the present invention;
Fig.7 is a vertical cross-sectional view of the thermostat in accordance with a second embodiment of the present invention;
Fig.8 is a vertical cross-sectional view of the thermostat in accordance with the second embodiment of the present invention being located inside the internal combustion engine and also shows the thermostat closing the flow area;
Fig.9 is a vertical cross-sectional view showing the thermostat in accordance with the second embodiment of the present invention being located inside the internal combustion engine and also shows the thermostat opening the flow area;
Fig.10(a) and Fig.10(b) are explanatory views showing the conventional thermostat being mounted to the liquid coolant flow line of the general internal combustion engine in general;
Fig.11 is an enlarged view of the mounting section of the thermostat shown in Figs.10.
Fig.12 is an exploded view showing the conventional thermostat being mounted to the liquid coolant flow path of the internal combustion engine; and
Fig.13(a) and Fig.13(b) are views showing the liquid coolant flowing through the space between the thermostat and the insertion hole.

### Preferred Embodiments of the Present Invention

The present invention is described concretely based on embodiments with reference to drawings. Here, although a thermostat described hereinafter as first embodiment and second embodiments of the present invention is a buried type thermostat applied to a liquid coolant flow path formed in an engine head, its layout position is not limited to the engine head but said thermostat may be mounted also to an engine block, inside a radiator, at a branch point of a bypass line or the like as long as it is within the liquid coolant flow path.

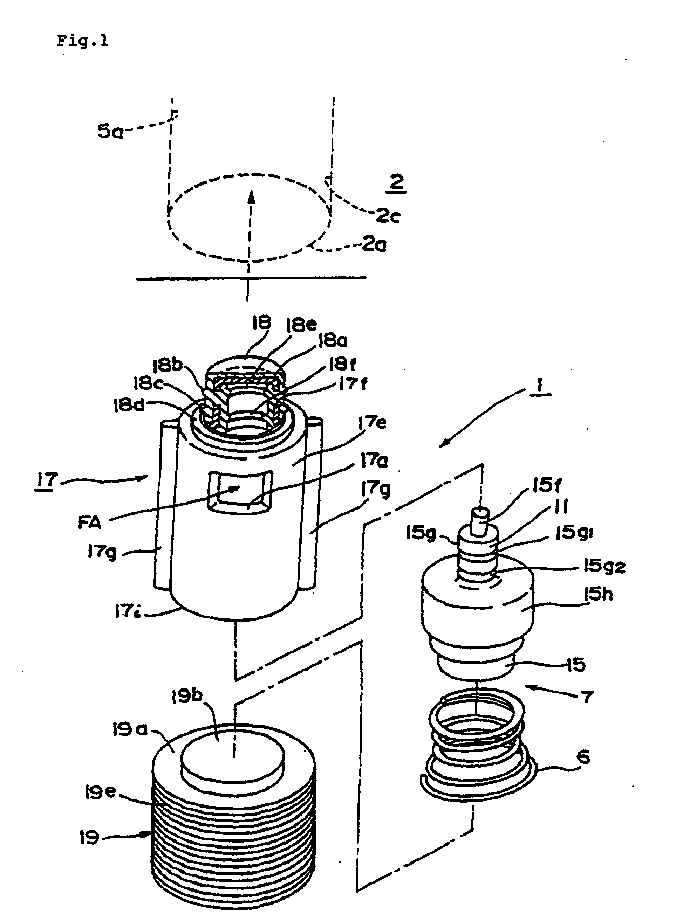

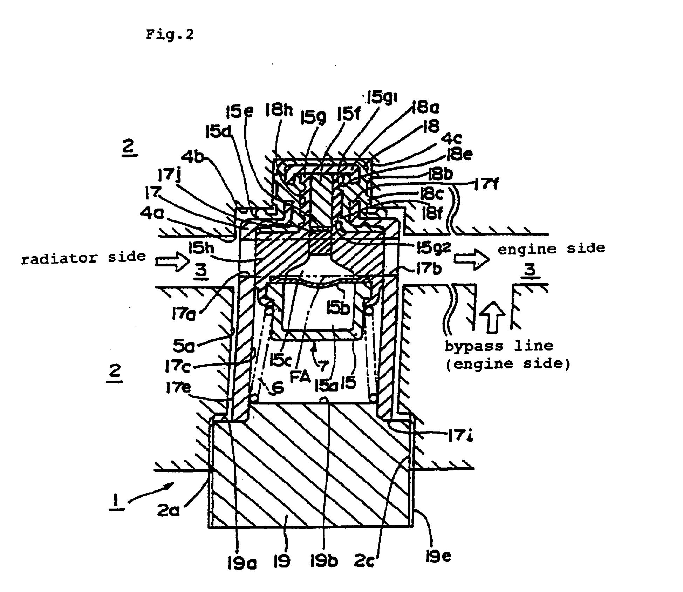

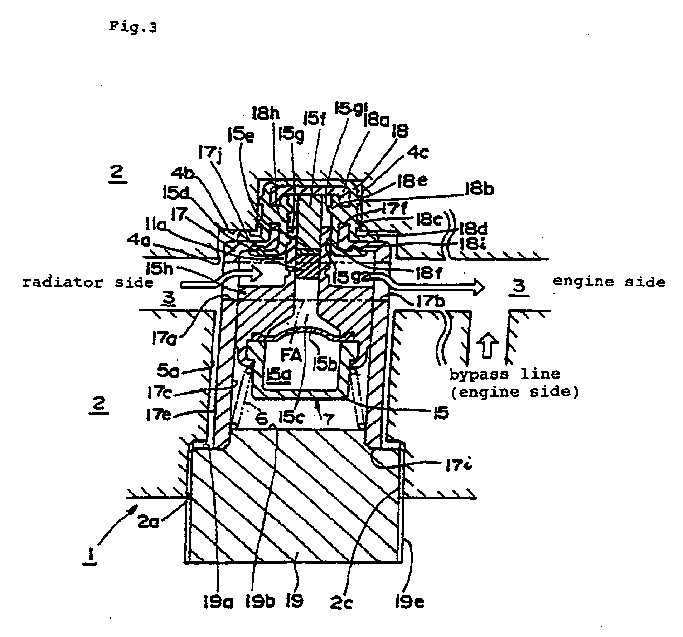

At first, the first embodiment of the present invention is described with reference to Fig.1 to Fig.3. Fig.1 is an exploded perspective view of the thermostat in accordance with a first embodiment of the present invention. Fig.2 and Fig.3 are vertical cross-sectional views of the thermostat in accordance with the first embodiment of the present invention, said thermostat being located inside the internal combustion engine and Fig.2 shows a flow passage area being closed and Fig.3 shows the flow path area being open. Further, this Fig. 1 shows the buried type thermostat viewed from the radiator side of said Fig.2 and Fig.3.

This buried type thermostat 1 is composed of a hollow cylindrical valve body 17 in which an entrance opening 17a and an exit opening 17b are formed in correspondence with said liquid coolant flow path 3, a thermo valve 7 housed in said valve body 17, a lid 19 screwed to an engine head 2 to secure the valve body 17, and a coil spring 6 loaded between the thermo valve 7 and the lid 19 to urge the thermo valve 7 upward as seen in the figure just like said buried type thermostat 122 which has already been proposed.

Said valve body 17 is composed of a hollow cylindrical member having outer diameters to allow insertion thereof into an upper insertion hole 4a and a lower insertion hole 5a formed in the engine head 2 and a synthetic rubber member 17g attached in a periphery 17e of said valve body extending intermediate between said entrance opening 17a and said exit opening 17b along the axis of the valve body 17.

In this embodiment, as shown in Fig. 1, said synthetic rubber member which connects the lower and upper ends of the valve body 17 along the axis of the valve body 17 is provided in the periphery 17e of the valve body between said entrance opening 17a and said exit opening 17b. Also, said rubber member 17g is positioned on opposite sides of said periphery 17e of the valve body. Therefore, in a case where the valve body 17 is inserted into the upper insertion hole 4a and the lower insertion hole 5a and assembled, said rubber member 17g closely fits in the upper insertion hole 4a and the lower insertion hole 5a.

Therefore, the liquid coolant will not leak out from a narrow space between the insertion hole and the projection of the valve body as seen in the buried type thermostat which has already been proposed and also, there is no need to form a guiding slot oppose to the bottom inner hole 5a.

Said synthetic rubber member 17g is not limited to the specific material as long as the material has characteristics of heat-resistance and cold-resistance, and the synthetic rubber member is made of materials, for example, NBR, EPDM or silicone rubber or the like.

And, this synthetic rubber member 17g and the valve body is unitized by baking the synthetic rubber member to the periphery 17e of the valve body. If the synthetic rubber member is attached by using adhesives, there is a likelihood of said synthetic rubber member falling apart. Therefore, it is desirable to attached by baking.

Further, although the top and bottom ends of said valve body 17 are both opened, the top end is narrowed down to form a peripheral surface of the end portion 17f and a cap member 18 is rigidly secured to this peripheral surface of the end portion 17f (refer to Fig.1 through Fig.3). Said peripheral surface of the end section 17f is formed to engage with the configuration of a stepped wall surface 4b of the upper insertion hole 4a. Said cap member 18 is made of a synthetic rubber and it is rigidly secured by baking or the like as said synthetic rubber member.

Here, said valve body 17 may be of any material as long as it meets the requirement of the heat conductive characteristics from the engine head and the machine processing characteristics taking into consideration the environment, where the thermostat is installed.

Further, the thermo valve 7 is composed of a wax case 15 charged with an expansive wax 15a, a diaphragm 15b to transmit the expansion and the contraction of the wax 15a to a semi-fluid 15c on upper side, a semi-fluid 15c on the upper side, said semi-fluid 15c transmitting the reaction of the diaphragm 15b to a rubber piston 15d on the upper side, a back-up plate 15e which transmits the reaction of the semi-fluid 15c to a piston 15f on the upper side, said piston 15f pushing a metal fixture 18a of the cap member 18 and the element (valve element) 15h having these component members arranged in a laminated structure.

Said element (valve element) 15h is adapted to slide along the inner wall surface 17c of the valve body 17 so as to open and close the entrance opening 17a, the exit opening 17b.

In addition, the wax case 15 in which the wax 15a is charged is rigidly secured to the bottom side of the element (valve element) 15h by calking or the like. On the other hand, a guide section 15g which guides the piston 15f is formed on an upper side opposite of said bottom side of the element (valve element) 15h. The outer periphery of this guide section 15g is formed in correspondence with the configuration of an inner wall surface 18h of the cap member 18 and formed to slidably fit within said inner wall surface 18h. Further, on the outer periphery of the guide section 15g, a plurality of annular slot sections 15g1 and 15g2 are formed along the periphery, and they are constituted to engage with plurality of lip sections 18e and 18f projecting from the inner wall surface 18h of the cap member 18.

As a result, integration of the guide section 15g and the cap member 18 becomes securer and also prevents the entry of the liquid coolant from the space defined between the guide section 15g and the piston 15f. Further, because the cap member 18 holds the outer peripheral surface of the guide section 15g, the guide section 15g which moves in response to an extension of the piston 15f is prevented from being inclined.
Further, said cap member 18 is formed in a cap-like configuration, surrounds metal fixture 18a by baking or the like and also rigidly secured to the outer peripheral surface of the end section 17f of the valve body 17. Also, a slot section 17j and a lip section 18i are formed to be engaged with each other on the contacting surface of the valve body 17 and cap member 18 to prevent entry of the liquid coolant or dust thereinto.
Moreover, lip sections 18b, 18c and 18d are projecting annularly from each of the brim section and the outer peripheral surface of the cap member 18. These lip sections 18b, 18c and 18d slidably contact the upper insertion hole 4a or a top insertion hole 4c to prevent entry of the liquid coolant.
Furthermore, the coil spring 6 is interposed in a space between the lid 19 and the thermo valve 7 to push the thermo valve body 7 upward continually (refer to Fig.1 to Fig.3). By the way, by modifying the resiliency or overall height of the coil spring 6, it is able to adapt itself properly to changes in a set operation temperature, a set flow rate or the like of the buried type thermo element 1.
Further, a male screw section 19e is formed on the outer peripheral surface of said lid 19 and on the other hand, a female screw section 2c is formed on an opening 2a of the lower insertion hole 5a formed in the engine head 2 and formed in correspondence with this male screw section 19e. Therefore, the lid 19 is secured by screwing the male screw section 19e and the female screw section 2c. Also, a top surface 19a of the lid 19 which enters the inside of the bottom insertion hole 5a comes into contact with valve body 17. Therefore, when the lid 19 is screwed in, the top surface 19a pushes a bottom surface 17i of the valve body 17 to support the valve body 17 between the upper insertion hole 4a or the stepped wall surface.

Furthermore, a projecting surface 19b is centrally formed in said top surface 19a of said lid 19. The diameter of said projecting surface 19 b is formed in correspondence with the inner diameter of the valve body 17 to be inserted thereinto and holds the coil spring 6 (refer to Fig.1 through Fig.3).

Next, a structure for mounting the buried type thermostat 1 and a concrete method for mounting the buried type thermostat 1 are described hereinafter.

As stated before, the upper insertion hole 4a and the bottom insertion hole 5a are formed in the engine head 2 in advance. In this upper insertion hole 4a and the bottom insertion hole 5a, there is no need to form the guiding slots 120a and 120b, as in the buried type thermostat which has already been proposed. Therefore, the working on the engine head can easily be done.

Then, said valve body 17 is inserted into the upper insertion hole 4a and the bottom insertion hole 5a which have been formed in advance. When performing this insertion, you need to conduct a positioning work to ensure that the entrance opening 17a and the exit opening 17b are in communication with the liquid coolant flow path 3 (refer to Fig.2 and Fig.3).

The thermo valve 7 and the coil spring 6 are located inside the valve body 17 into which the lid 19 is inserted. As a result, the top surface 19a of the lid 19 comes into contact with the bottom surface of the valve body 17 such that said top surface 19a pushes and moves said valve body 17. When the entrance opening 17a and the exit opening 17b reach the point where they are in communication with the liquid coolant flow path 3, the mounting of the thermostat is finished.

When the valve body 17 is assembled with the engine head 2, said rubber member closely fits in the upper insertion hole 4a and the bottom insertion hole 5a thus preventing the liquid coolant from leaking out from the space defined between the periphery of the valve body 17e and the upper insertion hole 4a or the bottom insertion hole 5a.

Therefore, when the thermo valve 7 blocks the flow path area FA, an inconvenience of the liquid coolant on the radiator side leaking out to the engine side can be reduced with the result that the engine warms up rapidly.

Next, a function of the buried type thermostat 1 in accordance with the instant embodiment is described hereinafter (refer to Fig.2 and Fig.3).

At first, the transfer of the buried type thermostat 1 from the closed status to the opened status will be described. The liquid coolant inside the liquid coolant flow path 3 before the warming up is at a low temperature and this temperature is transmitted to the wax 15a inside the wax case 15 by way of the periphery of the element (or valve element) 15h and the wax case 15 (refer to Fig.1)

Then, as the temperature of the liquid coolant inside the liquid coolant flow path 3 rises with the lapse of time, the wax 15a inside the wax case 15 expands to increase its volume. And in response to this volume increase, the diaphragm 15b bulges to the upper side, giving rise to a force to push the rubber piston 15d upward via semi-fluid 15c on the upper side. This force is transmitted to the piston 15f via backup plate 15e such that the piston 15f acts to project out from the guide section 15g. However, because a tip of the piston 15f is always in contact with the metal fixtures of the rigidly secured cap member 18, the element (valve element) 15h itself is pushed down by a relative movement against the piston 15f while overcoming the urge of the coil spring 6 (refer to Fig. 3).

At the same time, the annular slot section 15g1 of the guide section 15g, which engages with the lip section 18e of the cap member 18, moves downward along the inner wall surface 18h of the cap member 18 to engage with the lip section 18f of the cap member at last.

Although the position where this lip section 18f takes is normally at the bottom of the element (valve element) 15h, another lip section can be formed on the place between the lip section 18e and the lip section 18f. By forming this lip section, entry of the liquid coolant into the space between the guide section 15g and the piston 15f can be prevented.

Then, as the thermo valve 7 moves downward, the entrance opening 17a and the exit opening 17b closed by the outer peripheral surface of the element (valve element) 15h are opened to bring the flow path area FA into communication. As a result, the liquid coolant flows from the radiator side to the engine side as shown in the bold arrows of Fig.3.

Next, the transfer of the buried type thermostat 1 from the opened state to the closed status will be described. When the operation of the engine is stopped, the action of the water pump causes to stop the cycling of the liquid coolant inside the liquid coolant flow path 3. Then, as the temperature of the liquid coolant inside the liquid coolant flow path 3 decreases with the lapse of time, this change in the temperature is transmitted to the wax 15a inside the wax case 15 by way of the element (or valve element) 15h and the wax case 15. And as the temperature decreases, the expanded wax 15a inside the wax case 15 contracts and the thermo valve moves upward with the urge of the coil spring 6 which always gives a force to push the thermo valve upward.

As a result, the outer peripheral surface of the element (valve element) 15h closes the entrance opening 17a and the exit opening 17b to block the flow path area FA (refer to Fig.1).

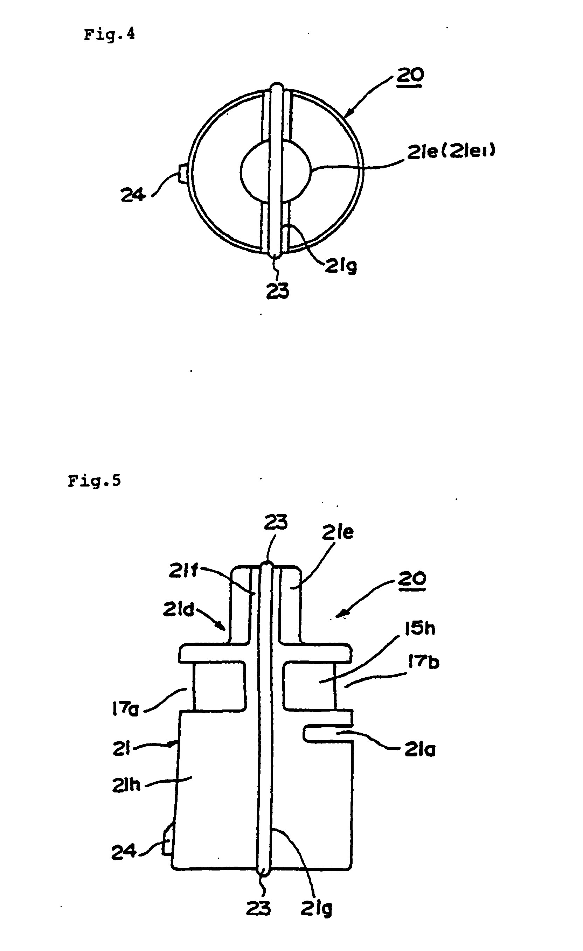

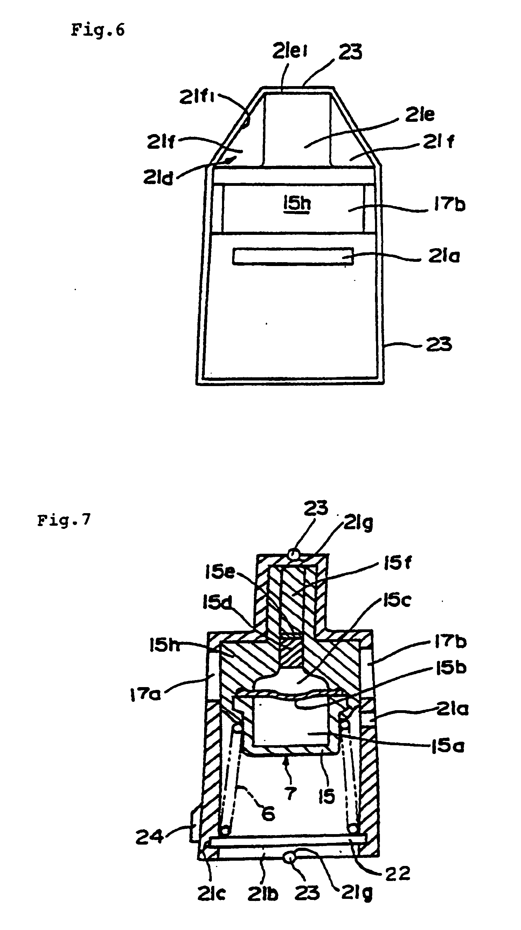

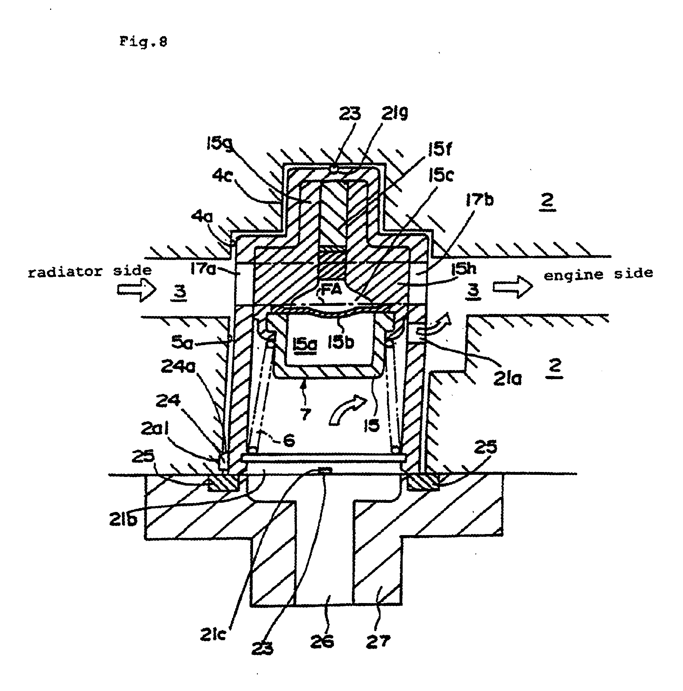

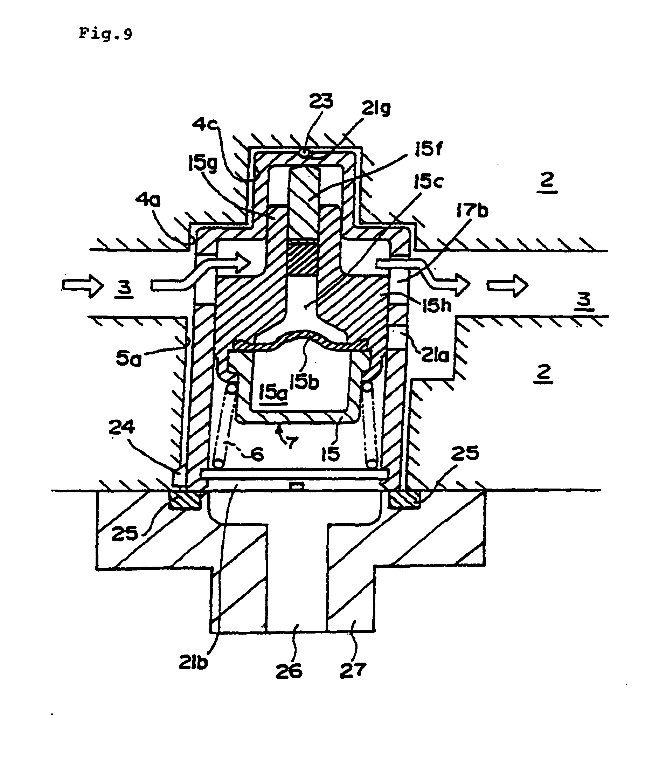

Next, the second embodiment of the buried type thermostat in accordance with the present invention is described with reference to Fig.4 to Fig.9. Here, Fig.4 is a plan view of the buried type thermostat in accordance with the second embodiment of the present invention, Fig.5 is a front view of the thermostat shown in Fig.4, Fig.6 is a side view of the said buried type thermostat and Fig. 7 is a vertical cross-sectional view of the buried type thermostat. Also, Fig.8 and Fig.9 are vertical cross-sectional views of the mounted state and the operating state of the buried type thermostat shown in Fig.4.

The buried type thermostat being adapted in this second embodiment has the same basic structure as the buried type thermostat 1 of the first embodiment. As the similar numerals are used for the sections with similar members or similar functions to said buried type thermostat 1, the detailed descriptions thereof are omitted.

Further, in a buried type thermostat 20 in accordance with this second embodiment, a periphery 21h of a valve body 21 has an exit opening 21a for the bypass line beneath said exit opening 17b for the liquid coolant flow path 3. Moreover, the bottom surface of the valve body 21 is open, the inner space of the valve body 21 and said exit opening 21a for the bypass line being in communication with each other when the element (valve element) 15h closes the entrance opening 17a and the exit opening 17b as shown in Fig. 7 and Fig.8.

Thus, the bottom surface of the valve body 21 is open and the entrance opening 21b for the bypass line is provided. Further, a metallic ring 22 to hold the coil spring 6 is received in a recess 21c formed in the inner wall of the lower end portion of the valve body 21.

Furthermore, a cap section 21e formed concentrically with the peripheral surface 21h has a smaller diameter than the peripheral surface 21h and is formed on the upper section 21d of the valve body 21 integrally with the valve body 21. Here, the cap section, made of synthetic rubber, used in said first embodiment is done without and the cap section 21e is formed integrally with the valve body 21.

In the first embodiment, the cap member is made of synthetic rubber and it is secured by baking but there is a likelihood of transformation depending on the material of the valve body. However, in this (second) embodiment, the transformation of the valve body can be prevented because the cap section 21e is formed integrally with the valve body 21.

Further, a connecting section 21f which connects an upper surface of the valve body 21 and the cap section 21e is formed on an upper section 21d of the valve body 21. This connecting section 21f is formed intermediate between the entrance opening 17a and the exit opening 17b for the liquid coolant flow path 3 as shown in Fig.5. Thus, it is constructed to partition the entrance opening 17a and the exit opening 17b for the liquid coolant flow path 3.

A continuous linear slot 21g is formed in the peripheral surface 21h of said valve body 21, a ridgeline section 21f1 of the connecting section 21f and a top end surface 21e1 of the cap section 21e such that a ring-shaped synthetic rubber member 23 is fitted into said slot 21g. Here, the slot 21g is also formed on the bottom periphery of the valve body 21 and the ring-shaped synthetic rubber member 23 is fitted thereinto but not projecting more than needed.

By fitting the ring-shaped synthetic rubber member 23 into the slots 21g formed in the peripheral surface of the valve body 21, the ridgeline section of the connecting section and the top end surface of the cap section, the synthetic rubber member with similar function as the synthetic rubber member in the first embodiment can be easily be attached. Thus, baking conducted to form the synthetic rubber member in the first embodiment is no longer needed while said rubber member will not move at the time of the mounting of the thermostat. Also, in the first embodiment, when the synthetic rubber member is secured by baking, there is a risk of transformation depending on the material of the valve body. However, when the ring-shaped synthetic rubber member 23 is used, the transformation of the valve body can be prevented.

Here, it is desirable that this ring-shaped synthetic rubber member 23 is made of NBR, EPDM or silicon rubber.

Also, a positioning lug 24 is formed beneath the entrance opening 17a for the liquid coolant flow path 3 of said valve body 21. Also, a recess 2a1 is formed in the sidewall of the insertion hole 5a in correspondence with this positioning lug 24 such that said positioning lug 24 is secured in the recess 2a1. Here, a slope 24a is formed on the upper side (entrance opening side of the liquid coolant flow path) of said positioning lug 24. Therefore, it is easy to be inserted into the insertion hole 5a and the valve body slightly transforms at the time of insertion. Therefore, after the positioning lug 24 is secured in said recess 2a1, said positioning lug 24 regains the original shape.

Moreover, a lid 27 in which a bypass line 26 is formed blocks the bottom surface of said valve body 21 by way of a sealing member 25.

In addition, although it is not shown in Fig.4 to Fig.9, a plurality of annular slot sections 15g1 and 15g2 may be formed around the outer peripheral surface of the guide section 15g such that said plurality of slot sections are engaged with a plurality of lip sections projecting on the inner wall surface of the cap member (valve body 21) just as the first embodiment.

Next, a structure for mounting the buried type thermostat 20 and a concrete method for mounting the buried type thermostat 20 will be described hereinafter.

The upper insertion hole 4a, the bottom insertion hole 5a and also the recess 2a1 are formed in the engine head 2 just as the first embodiment.

Then, the thermostat 20 constructed in a manner shown in Fig. 4 to Fig.7 just as the first embodiment is inserted into the bottom insertion hole 5a.

When performing this insertion, a positioning work is conducted so that the positioning lug 24 is secured in the recess 2a1. And when the projection 24 has been secured in the recess 2a1, the entrance opening 17a and the exit opening 17b come into communication with the liquid coolant flow path 3. In this state, said rubber member 23 closely fits in the insertion holes 4a, 4c and 5a.

Because said rubber member 23 closely fits in the insertion holes 4a, 4c and 5a, when this valve body 21 is inserted into the engine head 2, the liquid coolant is prevented from leaking out through a space left between the peripheral surface 21h of the valve body 21 and the insertion 4a, 4c and 5a.

Therefore, when the thermo valve 7 blocks the flow path area FA, an inconvenience that the liquid coolant on the radiator side leaks out to the engine side can be reduced with the result that the engine warms up rapidly.

Next, a function of the buried type thermostat 1 in accordance with the present embodiment is described hereinafter (refer to Fig.8 and Fig.9).

At first, the transfer of the buried type thermostat 1 from the closed status to the opened status will be described. The liquid coolant inside the liquid coolant flow path 3 before the warming up is at a low temperature and this lower temperature is transmitted to the wax 15a inside the wax case 15 by way of the periphery of the element (or valve element) 15h and the wax case 15.

When the temperature of the liquid coolant inside the liquid coolant flow path 3 is low, a bypass line exit opening 21a is opened while the element (valve element) 15h blocks the flow path area FA and it is in communication with the liquid coolant flow path 3 of the exit opening 17b side. In other words, the bypass line is opened and a water coolant from the engine moves through the bypass line 26 of the lid 27, the entrance opening 21b and the exit opening 21a for the bypass line and then back to the engine again thus the engine warms up rapidly.

Then, as the temperature of the liquid coolant inside the liquid coolant flow path 3 rises with the lapse of time, the wax 15a inside the wax case 15 expands to increase its volume. And in response to this volume increase, the diaphragm 15b bulges to the upper side, giving rise to a force to push the rubber piston 15d upward by way of semi-fluid 15c on the upper side. This force is transmitted to the piston 15f via backup plate 15e and the piston 15f tries to project out from the guide section 15g. However, because a tip of the piston 15h is always in contact with the inner surface of the cap section 21e, the element (valve element) 15h itself is pushed down by a relative movement against the piston 15f while overcoming the urge of the coil spring 6 (refer to Fig. 9).

Then, the thermo valve 7 slides downward such that the entrance opening 17a and the exit opening 17b of the valve body 17 so far closed by the peripheral side wall of the element (valve element) 15h are opened and the flow path area FA is defined. Here, with the thermo valve being pushed down and the flow path area FA being thus defined, the bypass line opening 21a is closed by the peripheral side wall 12 of the element (valve element) 15h.

As a result, the liquid coolant flows as shown by bold arrow marks of Fig.9 from the radiator side to the engine side.

Next, the transfer of the buried type thermostat 1 from the opened status to the closed status is described with reference to Fig.9. When you stop the operation of the engine, the operation of the water pump stops and the cycling of the liquid coolant inside the liquid coolant flow path 3 stops. Then, as the temperature of the liquid coolant inside the liquid coolant flow path 3 decreases with the lapse of time, this change in the temperature is transmitted to the wax 15a inside the wax case 15 by way of the element (or valve element) 15h and the wax case 15. And as the temperature decreases, the wax 15a inside the expanded wax case 15 contracts and the thermo valve moves upward with the incremental force of the coil spring 6 which always gives a force to push the thermo valve upward. As a result, the outer peripheral surface of the element (valve element) 15h closes the entrance opening 17a and the exit opening 17b and the flow path area FA is blocked. And the bypass line exit opening 21a is opened

(refer to Fig.8).

As described above, with the thermostat and the structure for mounting the thermostat the liquid coolant is prevented from leaking out from the space left between the valve body and the insertion hole. Also, the guide slot for guiding the valve body is not necessary to be formed onto the members where the thermostat is mounted, thus the processing cost can be cut.

## Claims

1. A thermostat (1) comprising a cylindrical valve body (17) formed with an entrance opening (17a) and an exit opening (17b) in a periphery thereof; a flow path area defined within said valve body (17) to bring said entrance opening (17a) and said exit opening (17b) into communication with each other; a valve element (15b) movable back and forth across said flow path area in response to a temperature change of a liquid coolant flowing in said flow path area to provide blockage and communication thereof to the flow path area in response to movement thereof;
**characterised by** a synthetic rubber member (17g; 23) along an axis of said valve body (17) on a periphery of the valve body (17) between said entrance opening (17a) and said exit opening (17b).

2. A thermostat as set forth in claim 1 wherein said synthetic rubber member (17g) is formed across the periphery of said valve body (17) by baking.

3. A thermostat as set fourth in claim 1, further including a piston (15d, 15f) movable back and forth to shift said valve body (17) in response to a temperature change of the liquid coolant flowing through said flow path area; and a cap member (21e) projecting from a top end surface of said valve body (17), said piston (15d; 15f) being in contact with an inner wall thereof;
said synthetic rubber (23) member being constituted in the periphery of said valve body (17) and the top end surface of said cap member (21e).

4. A thermostat as set fourth in claim 1, further including a piston (15d, 15f) moving back and forth to shift said valve body (17) in response to a temperature change of the liquid coolant flowing in said flow path area;
a cap member (21e) projecting from a top end surface of said valve body (17), said piston (15) being in contact with an inner wall thereof,
a connecting section (21f) for connecting the top end surface of said valve body (17) and said cap member (21e) ; and
slots (21c) formed in the periphery of said valve body (17), a ridgeline of the connecting section (21f) and the top end surface of said cap member (21e), and said synthetic rubber being inserted into said slots (21c).

5. A thermostat as set forth in any one of claims 1, 3 or 4 wherein said synthetic rubber member (23) is ring-shaped.

6. A structure for mounting a thermostat as set forth in any one of claims 1 to 4 wherein
said valve body is inserted into an insertion hole (4a, 5a) formed across said liquid coolant flow path area and the valve body (17) and said insertion hole come into close contact with each other by way of said rubber member (17g, 23).

7. A structure for mounting a thermostat as set forth in claim 5 wherein
said valve body (17) is inserted into an insertion hole (4a, 5a) formed across said liquid coolant flow path area and the valve body (17) and said insertion hole come into close contact by way of said rubber member (17g, 23).

## Patentansprüche

1. Thermostat (1) mit einem zylindrischen Ventilkörper (17), der mit einer Zugangsöffnung (17a) und einer Ausgangsöffnung (17b) auf einer Außenseite davon ausgebildet ist, bei dem ein Bereich der Strömungsbahn innerhalb des Ventilkörpers (17) definiert ist, um die Eingangsöffnung (17a) und die Ausgangsöffnung (17b) miteinander zu verbinden, und mit einem Ventilelement (15b), das über den Bereich der Strömungsbahn hinweg in Abhängigkeit von einer Temperaturveränderung einer Kühlflüssigkeit, die in dem Bereich der Strömungsbahn fließt, hin und her bewegbar ist, um eine Blockierung und eine Verbindung von diesen mit dem Bereich der Strömungsbahn in Abhängigkeit von einer Bewegung von diesem bereitzustellen,
**gekennzeichnet durch** ein Kunstkautschukelement (17g, 23) entlang einer Achse des Ventilkörpers (17) auf einer Außenseite des Ventilkörpers (17) zwischen der Eingangsöffnung (17a) und der Ausgangsöffnung (17b).

2. Thermostat (1) nach Anspruch 1, bei dem das Kunstkautschukelement (17g) über die Außenseite des Ventilkörpers (17) hinweg durch Erhitzen ausgebildet ist.

3. Thermostat (1) nach Anspruch 1, ferner mit einem Kolben (15d, 15f), der hin und her bewegbar ist, um den Ventilkörper (17) in Abhängigkeit von einer Temperaturveränderung der Kühlflüssigkeit, die durch den Bereich der Strömungsbahn fließt, zu verschieben, und mit einem Deckelelement (21e), das aus einer oberen Endoberfläche des Ventilkörpers (17) hervorragt, wobei der Kolben (15d, 15f) in Kontakt mit einer Innenwand von diesem steht,
bei dem das Kunstkautschukelement (23) auf der Außenseite des Ventilkörpers (17) und der oberen Endoberfläche des Deckelelements (21e) ausgebildet ist.

4. Thermostat (1) nach Anspruch 1, ferner mit einem Kolben (15d, 15f), der sich hin und her bewegt, um den Ventilkörper (17) in Abhängigkeit von einer Temperaturveränderung der Kühlflüssigkeit, die in dem Bereich der Strömungsbahn fließt, zu verschieben,
mit einem Deckelelement (21e), das aus einer oberen Endoberfläche des Ventilkörpers (17) hervorragt, bei dem der Kolben (15) in Kontakt mit einer Innenwand davon steht,
mit einem Verbindungsabschnitt (21f) zum Verbinden der oberen Endoberfläche des Ventilkörpers (17) und des Deckelelements (21e), und
mit Nuten (21c), die auf der Außenseite des Ventilkörpers (17), auf einem Kamm des Verbindungsabschnitts (21f) und auf der oberen Endoberfläche des Deckelelements (21e) ausgebildet sind, und bei denen der Kunstkautschuk in die Nuten (21c) eingefügt ist.

5. Thermostat (1) nach einem der Ansprüche 1, 3 oder 4, bei dem das Kunstkautschukelement (23) ringförmig ist.

6. Struktur zum Anbringen eines Thermostats nach einem der Ansprüche 1 bis 4, bei welcher
der Ventilkörper in ein Einführloch (4a, 5a) eingeführt ist, welches über den Bereich der Strömungsbahn der Kühlflüssigkeit hinweg ausgebildet ist, und der Ventilkörper (17) und das Einführloch in engen Kontakt miteinander über das Kautschukelement (17g, 23) gelangen.

7. Struktur zum Anbringen eines Thermostats nach Anspruch 5, bei welcher
der Ventilkörper (17) in ein Einführloch (4a, 5a) eingeführt ist, welches über den Bereich der Strömungsbahn der Kühlflüssigkeit hinweg ausgebildet ist, und der Ventilkörper (17) und das Einführloch in engen Kontakt mittels des Kautschukelements (17g, 23) gelangen.

## Revendications

1. Thermostat (1) comprenant un corps de vanne cylindrique (17) formé avec une ouverture d'entrée (17a) et une ouverture de sortie (17b) dans une périphérie de celui-ci; une zone de voie de passage définie à l'intérieur dudit corps de vanne (17) pour amener ladite ouverture d'entrée (17a) et ladite ouverture de sortie (17b) en communication l'une avec l'autre ; un élément de vanne (15b) déplaçable en va et vient d'un bout à l'autre de ladite zone de voie de passage en réponse à un changement de température d'un agent de refroidissement liquide s'écoulant dans ladite zone de voie de passage pour fournir un blocage et une communication de celui-ci à la zone de voie de passage en réponse au mouvement de celui-ci;
**caractérisé par** un élément en caoutchouc synthétique (17g ; 23) le long d'un axe dudit corps de vanne (17) sur une périphérie du corps de vanne (17) entre ladite ouverture d'entrée (17a) et ladite ouverture de sortie (17b).

2. Thermostat selon la revendication 1, dans lequel ledit élément en caoutchouc synthétique (17g) est formé d'un bout à l'autre de la périphérie dudit corps de vanne (17) par cuisson.

3. Thermostat selon la revendication 1, incluant en outre un piston (15d, 15f) déplaçable en va et vient pour décaler ledit corps de vanne (17) en réponse à un changement de température de l'agent de refroidissement liquide s'écoulant à travers ladite zone de voie de passage ; et un élément formant capuchon (21e) dépassant d'une surface d'extrémité supérieure dudit corps de vanne (17), ledit piston (15d ; 15f) étant en contact avec une paroi intérieure de celui-ci ;
ledit élément en caoutchouc synthétique (23) étant constitué dans la périphérie dudit corps de vanne (17) et de la surface d'extrémité supérieure dudit élément formant capuchon (21e).

4. Thermostat selon la revendication 1, incluant en outre un piston (15d, 15f) se déplaçant en va et vient pour décaler ledit corps de vanne (17) en réponse à un changement de température de l'agent de refroidissement liquide s'écoulant dans ladite zone de voie de passage ;
un élément formant capuchon (21e) dépassant d'une surface d'extrémité supérieure dudit corps de vanne (17), ledit piston (15) étant en contact avec une paroi intérieure de celui-ci,
une section de connexion (21f) pour relier la surface d'extrémité supérieure dudit corps de vanne (17) et ledit élément formant capuchon (21e) ; et
des fentes (21c) formées dans la périphérie dudit corps de vanne (17), une ligne d'arête de la section de connexion (21f) et de la surface d'extrémité supérieure dudit élément formant capuchon (21e), et ledit caoutchouc synthétique étant inséré dans lesdites fentes (21c).

5. Thermostat selon l'une quelconque des revendications 1, 3 ou 4, dans lequel ledit élément en caoutchouc synthétique (23) est de forme annulaire.

6. Structure pour monter un thermostat selon l'une quelconque des revendications 1 à 4, dans laquelle
ledit corps de vanne est inséré dans un trou d'insertion (4a, 5a) formé d'un bout à l'autre de ladite zone de voie de passage d'agent de refroidissement liquide, et le corps de vanne (17) et ledit trou d'insertion entrent en contact étroit l'un avec l'autre à l'aide dudit élément en caoutchouc (17g, 23).

7. Structure pour monter un thermostat selon la revendication 5, dans laquelle
ledit corps de vanne (17) est inséré dans un trou d'insertion (4a, 5a) formé d'un bout à l'autre de ladite zone de voie de passage d'agent de refroidissement liquide, et le corps de vanne (17) et ledit trou d'insertion entrent en contact étroit au moyen dudit élément en caoutchouc (17g, 23).
